# EUROPEAN PATENT SPECIFICATION

(11) **EP 0 780 178 B1**
(45) Date of publication and mention of the grant of the patent: **26.07.2000**
(21) Application number: 96120263.7
(22) Date of filing: 17.12.1996
(51) Int. Cl.: B23B 13/02

(54) **Device for the intermittent advancement of bars to be machined in a multispindle lathe**
Vorrichtung für einen Mehrspindeldrehautomaten zum intermittierenden Vorschub von Stangen
Dispositif pour tour multibroche pour avancement discontinu des barres

(30) Priority: 22.12.1995 IT BO950601
(43) Date of publication of application: 25.06.1997
(73) Proprietor: IEMCA Giuliani Macchine Italia S.p.A., 48018 Faenza (Ravenna) (IT)
(72) Inventor: Camelli, Marco, 48018 Faenza (IT)
(74) Representative: Modiano, Guido, Dr.-Ing.

(56) References cited:
- DE-C- 564 269
- GB-A- 2 013 537

## Description

The present invention relates to a multispindle lathe with a device for the intermittent advancement of the bar to be machined (see e.g. GB-A-2 013 537).

In multispindle lathes there is provided a lever system which opens the collets of the lathe to allow the advancement of the bars at the end of each machining step. The collet opening step is very short therefore it requires a quick and fast advancement with considerable pressures on the bar.

In small-diameter bars, however, these pressures cause severe linearity problems, to the point of causing permanent deformations.

A principal aim of the present invention is therefore to provide a device which eliminates the above mentioned drawback and ensures an advancement of the bar which is in step with the opening of the collet and can be adjusted so as to be equal to the length of the part to be machined.

Within the scope of this aim, an object of the present invention is to provide a device which is structurally reliable, simple in concept, and can also be applied to existing lathes after easily executable modifications.

This aim and this object are achieved with a multispindle lathe with a device for the intermittent advancement of the bar to be machined, characterized in that it comprises a hydraulic pump actuated by the lever system of the lathe actuating the advancement of the bars, said pump being adapted to feed a bar pusher advancement motor.

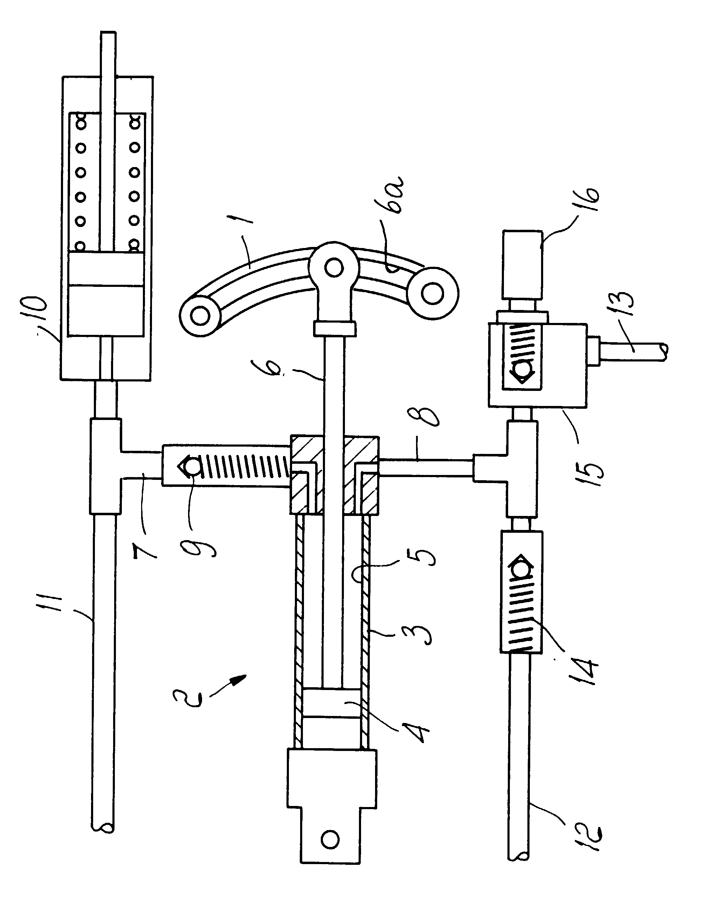

Further features and characteristics of an embodiment of the invention will become apparent from the following description of a preferred embodiment thereof, illustrated only by way of non-limitative example in the accompanying drawing, wherein:
the sole figure is a schematic view of the device.

With reference to said figure, the reference numeral 1 designates the lever which is provided in the multispindle lathe to actuate synchronously the advancement of the bars and usually performs an oscillation of constant extent.

The lever 1 is pivoted at one end and a hydraulic pump, generally designated by the reference numeral 2, is operatively associated therewith. Said pump comprises a cylinder 3, wherein a piston 4 slides, forming a chamber 5 with said cylinder. The piston 4 is fixed to a stem 6, articulately coupled to a point of the lever 1 which is arranged at a preset distance from the fulcrum of said lever. The coupling point of the stem 6 on the lever 1 is adjustable along a slot 6a, so as to vary the stroke of the piston and therefore the capacity of the pump 2. The chamber 5 is provided with an intake duct 7 and with a discharge duct 8. A check valve 9 is arranged in the intake duct 7, and a hydraulic accumulator 10 and a duct 11, which supplies actuation oil at a holding pressure, are connected upstream of said check valve.

The duct leading out of the pump 2 splits into a duct 12 which is connected to the bar pusher advancement motor and into a duct 13 which is connected to the discharge. A check valve 14 is inserted along the duct 12 and prevents the oil from flowing back into the pump 2. An overpressure valve 15 is instead arranged along the duct 13 and allows the oil to flow back into the discharge when a preset pressure is exceeded. The overpressure valve 15 is provided with an adjustment ring 16 which allows to select the maximum pressure.

The operation of the device is clearly deducible from the above description. The actuation of the lever 1 causes the movement of the piston 4 so as to compress the oil contained in the chamber 5 and convey it, through the check valve 14 and the duct 12, towards the hydraulic motor, which causes the advancement of the bar to be machined by an extent corresponding to the displaced volume. By shifting the coupling point of the stem 6 along the slot 6a, it is possible to adjust the stroke of the piston 4 so that said piston displaces a volume of oil required by the hydraulic motor to provide an advancement which is practically equal to the length of the part to be machined.

During the return stroke, the piston 4, through the valve 9, draws oil at low pressure from the accumulator 10, so as to replenish the pump 2. During this step, the valve 14 remains closed.

It is evident that the described invention fully achieves the intended aim and object. In particular, it should be noted that the pressurized oil conveyed by the duct 12 by means of a rotary distributor can be distributed over the motors of a bar feeder configured like a rotating drum and coaxial to the lathe.

A substantial advantage of an embodiment of the invention is constituted by the overpressure valve 15, which ensures the discharge of the oil if the advancement of the bar jams.

Numerous modifications and variations are possible in the practical embodiment of the invention.

The materiald and the dimensions may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Multispindle lathe with a device for the intermittent advancement of the bar to be machined, characterized in that it comprises a hydraulic pump (2) actuated by the lever system (1) of the lathe which actuates the advancement of the bars, said pump (2) being adapted to feed a bar pusher advancement motor.

2. Multispindle lathe according to claim 1, characterized in that said pump (2) comprises a cylinder (3) wherein a piston (4) slides which forms a chamber (5) together with said cylinder and is fixed to a stem (6) articulately coupled to a median point of the oscillating lever (1) of the lathe, which actuates the advancement of the bar, which is spaced from the fulcrum of said lever, said chamber (5) having an intake duct (7) and a discharge duct (8), a check valve (9) being arranged in said intake duct (7), a hydraulic accumulator (10) and a duct (11) for supplying actuation oil at a holding pressure being connected upstream of said check valve, said pump discharge duct (8) splitting into a duct (12), which is connected to the bar pusher advancement motor and along which a check valve (14) is inserted, and into a duct (13), which is connected to the discharge and along which there is provided an overpressure valve (15) which allows the oil to flow back into the discharge when a preset pressure is exceeded.

3. Multispindle lathe according to claim 2, characterized in that said overpressure valve (15) is provided with an adjustment ring (16) which allows to select the maximum pressure.

4. Multispindle lathe according to claim 2 or 3, characterized in that the coupling point of the stem (6) on said lever (1) can be adjusted along an elongated slot (6a) of said lever.

## Patentansprüche

1. Mehrspindel-Drehbank mit einer Vorrichtung zur diskontinuierlichen Vorwärtsbewegung der zu bearbeitenden Stange,
dadurch gekennzeichnet, daß die Vorrichtung eine Hydraulikpumpe (2) umfaßt, die durch das die Vorwärtsbewegung der Stangen auslösende Hebelsystem (1) der Drehbank betätigt wird, wobei die Pumpe (2) so ausgebildet ist, daß sie einen Stangenschiebermotor für die Vorwärtsbewegung speist.

2. Mehrspindel-Drehbank nach Anspruch 1, dadurch gekennzeichnet, daß die Pumpe (2) einen Zylinder (3) umfaßt, in dem ein Kolben (4) eine Gleitbewegung durchführt, welcher zusammen mit dem Zylinder eine Kammer (5) bildet und an einem Schaft (6) befestigt ist, der an mittleren einem Punkt des Schwingbewegungen ausführenden und die Vorwärtsbewegung der Stange auslösenden Hebels (1) der Drehbank gelenkig angekoppelt ist, wobei der mittlere Punkt zum Drehpunkt des Hebels beabstandet ist und die Kammer (5) eine Einlaßleitung (7) und eine Auslaßleitung (8) aufweist, wobei in der Einlaßleitung (7) ein Regulierventil (9) vorgesehen ist und die Pumpe zudem einen Hydrauliksammelbehälter (10) und eine Leitung (11) zur Zufuhr von Hydrauliköl mit konstantem Druck enthält, die stromaufwärts zu diesem Regulierventil angeschlossen sind, wobei sich die Pumpenauslaßleitung (8) in eine mit dem Stangenschiebermotor verbundene und mit einem Regulierventil (14) versehene Leitung (12) sowie eine Leitung (13) aufteilt, die mit dem Auslaß verbunden ist und an der ein Überdruckventil (15) angeordnet ist, das ein Rückfließen des Öls in den Auslaß ermöglicht, wenn ein bestimmter Druck überschritten wird.

3. Mehrspindel-Drehbank nach Anspruch 2, dadurch gekennzeichnet, daß das Überdruckventil (15) mit einem Einstellring (16) versehen ist, der eine Auswahl des Maximaldrucks ermöglicht.

4. Mehrspindel-Drehbank nach Anspruch 2 oder 3, dadurch gekennzeichnet, daß der Ankopplungspunkt des Schafts (6) am Hebel (1) sich entlang eines am Hebel vorgesehenen länglichen Schlitzes (6a) einstellen läßt.

## Revendications

1. Tour multibroche comportant un dispositif pour l'avance intermittente de la barre à usiner, caractérisé en ce qu'il comprend une pompe hydraulique (2) actionnée par le système de levier (1) du tour qui actionne l'avance des barres, ladite pompe (2) étant adaptée pour alimenter un moteur d'avance de pousseur de barre.

2. Tour multibroche selon la revendication 1, caractérisé en ce que ladite pompe (2) comprend un cylindre (3) dans lequel coulisse un piston (4) qui forme une chambre (5) avec ledit cylindre et est fixé à une tige (6) accouplée de manière articulée à un point médian du levier oscillant (1) du tour, qui actionne l'avance de la barre, qui est espacée du point d'appui dudit levier, ladite chambre (5) comportant un conduit d'entrée (7) et un conduit de sortie (8), un clapet anti-retour (9) étant disposé dans ledit conduit d'entrée (7), un accumulateur hydraulique (10) et un conduit (11) pour délivrer de l'huile d'actionnement à une pression de maintien étant connecté en amont dudit clapet anti-retour, ledit conduit de sortie de pompe (8) se divisant en un conduit (12) qui est relié au moteur d'avance du pousseur de barre et sur lequel est inséré un clapet anti-retour (14), et en un conduit (13) qui est relié à la sortie et sur lequel il est prévu une soupape de surpression (15) qui permet à l'huile de s'écouler en arrière vers la sortie lorsqu'une pression prédéterminée est dépassée.

3. Tour multibroche selon la revendication 2, caractérisé en ce que ladite soupape de surpression (15) comporte une bague de réglage (16) qui permet de sélectionner la pression maximale.

4. Tour multibroche selon la revendication 2 ou 3, caractérisé en ce que le point d'accouplement de la tige (6) sur ledit levier (1) peut-être réglé le long d'une fente allongée (6a) dudit levier.
